(19) **Europäisches Patentamt**

**European Patent Office**

**Office européen des brevets**

(11) **EP 0 860 512 B1**

(12) **EUROPÄISCHE PATENTSCHRIFT**

(45) Veröffentlichungstag und Bekanntmachung des Hinweises auf die Patenterteilung:
**09.05.2001 Patentblatt 2001/19**

(51) Int Cl.[7]: **C23C 8/20**, C21D 1/76

(21) Anmeldenummer: **98103153.7**

(22) Anmeldetag: **23.02.1998**

(54) **Verfahren/Anlage zur Erzeugung von Behandlungsgas für die Wärmebehandlung metallischen Guts**

Method/apparatus for making a treating gas for the thermal treatment of a metallic product

Procédé/appareil pour la préparation d'un gaz de traitement pour le traitement d'un produit métallique

(84) Benannte Vertragsstaaten:
**AT DE ES FR GB IT**

(30) Priorität: **25.02.1997 DE 19707470**

(43) Veröffentlichungstag der Anmeldung:
**26.08.1998 Patentblatt 1998/35**

(73) Patentinhaber: **Linde Gas Aktiengesellschaft**
**82049 Höllriegelskreuth (DE)**

(72) Erfinder:
• **Strigl, Reinhard, Dipl.-Ing.**
**80995 München (DE)**

• **Jurmann, Alexander, Dipl.-Ing.**
**85540 Haar (DE)**

(74) Vertreter: **Kasseckert, Rainer et al**
**Linde AG**
**Zentrale Patentabteilung**
**Dr.-Carl-von-Linde-Strasse 6-14**
**82049 Höllriegelskreuth (DE)**

(56) Entgegenhaltungen:
**EP-A- 0 430 313       EP-A- 0 458 183**
**EP-A- 0 598 384       EP-A- 0 794 263**
**WO-A-90/03218        US-A- 4 398 971**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Erzeugung von CO- und $H_2$-reichem Behandlungsgas für die Wärmebehandlung metallischen Guts, wobei

- ein aus einer, mit der Wärmebehandlung in Verbindung stehenden Kohlenwasserstoffgas-Verbrennung stammendes Abgas vom Wasser befreit wird,
- diesem Gas wiederum ein Kohlenwasserstoffgas zugemischt wird und das im so erhaltenen Gasgemisch enthaltene Kohlendioxid mit dem Kohlenwasserstoffgas katalytisch unter Wärmezufuhr in ein CO- und $H_2$-reiches Behandlungs-/Reaktionsgas umgesetzt wird. Ebenso betrifft die Erfindung eine entsprechende Wärmebehandlungsanlage sowie eine entsprechende Katalysatorretorte.

In einer Reihe von Wärmebehandlungsverfahren und dabei insbesondere bei Aufkohlungen ist es besonders vorteilhaft, wenn mit einer stickstoffarmen und etwa zu gleichen Teilen CO und $H_2$ enthaltenden Atmosphäre gearbeitet werden kann. Bei Verfahren dieser Art ist es unter anderem bekannt, im Betrieb abfließende Gase mit speziellen Gastrennanlagen aufzubereiten und im Prozeß wieder einzusetzen (vgl. DE-OS 41 10 361).

Insbesondere ist es außerdem bekannt, $CO_2$ aus dem Abgas von Heizbrennern mit spezifischen Gastrennprozessen und -anlagen abzutrennen und das $CO_2$ zur Bildung von Behandlungsgas heranzuziehen (siehe DE-OS 43 18 400 sowie die, ebenfalls vom Erfinder vorliegender Erfindung stammende, am 18.06.1996 angemeldete und aus 10.09.1997 veröffentlichte EP-A-0 794 263).

Ferner sind aus der EP-A-0 430 313 sowie aus der EP-A-0 458 183 auf katalysatorbasis arbeitende Behandlungsgas-Erzeugungs-Vorrichtungen bekannt, die längliche, rohrartig ausgebildete und ineinandergeschachtelte Einheiten darstellen.

Die Aufgabenstellung zu vorliegender Erfindung bestand darin, eine auf Kohlendioxid ($CO_2$) beruhende Erzeugungs-Methode für CO- und $H_2$-reiches und zugleich stickstoffarmes Behandlungsgas anzugeben, die möglichst einfach und insbesondere ohne aufwendige Gastrennanlagen realisierbar ist.

Gelöst wird diese Aufgabe dadurch, daß bei einem Verfahren der eingangs beschriebenen Art die zugehörige Kohlenwasserstoffgas-Verbrennung mit reinem Sauerstoff oder sauerstoffangereicherter Luft durchgeführt wird.

Das Ergebnis dieser Verfahrensweise ist ein stickstoffarmes bis stickstofffreies, CO- und H2-reiches Reaktions- oder Behandlungsgas für Wärmebehandlungsprozesse. Ein wesentlicher Ausgangspunkt der Erfindung besteht darin, die bei Wärmebehandlungen ohnehin - häufig an mehreren Stellen - erforderliche Wärmeerzeugung nicht in Verbrennungsprozessen mit Luft, sondern in Verbrennungsprozessen unter Einsatz von reinem Sauerstoff oder deutlich sauerstoffangereicherter Luft zu erzeugen. Das hierbei erhaltene Verbrennungsabgas enthält dann, abhängig vom Sauerstoffanreicherungsgrad, deutlich weniger bis überhaupt keinen Stickstoff.

Vorteilhaft wird erfindungsgemäß mindestens eine Verdreifachung des natürlichen Sauerstoffanteils in der Luft eingestellt. Besonders vorteilhaft ist jedoch die Verfahrensweise mit reinem Sauerstoffbetrieb. Bei letzterem wird ein stickstofffreies Behandlungs- bzw. Reaktionsgas erzielt, das seinerseits wiederum ein hochwertiges Brenngas darstellt.

In einer Variante der Erfindung wird derartiges Behandlungsgas auch als Brenngas für Heizzwecke angewandt und kann dann wiederum auch als Ausgangsprodukt für weiteres Behandlungs-/Reaktionsgas herangezogen werden.

Eine besonders vorteilhafte Variante der Erfindung besteht darin, die für die Umsetzung von $CO_2$ und Erdgas (Methan) erforderliche Wärmezufuhr zur einer entsprechenden Katalysatoreinheit mittels eines mit Sauerstoff oder sauerstoffangereicherter Luft arbeitenden Verbrennungsprozesses zu gewinnen und die Abgase dieses Prozesses dann für das erfindungsgemäße Vorgehen heranzuziehen.

Selbstverständlich können jedoch ebenso die Abgase beliebiger, innnerhalb oder in Nachbarschaft einer Wärmebehandlungsanlage arbeitender Heizeinrichtungen und Strahlrohre für den erfindungsgemäßen Zweck herangezogen werden. Unter Umständen sind jedoch solche Heizeinrichtungen für Sauerstoffbetrieb zu modifizieren. Verbrennungen mit sauerstoffreichen Gasen führen aufgrund höherer Flammentemperaturen zu einer höheren thermischen Belastung der betreffenden Einrichtungen.

Eine erfindungsgemäße Wärmebehandlungsanlage mit Behandlungsgas erzeugender Katalysatoreinheit (K) ist gekennzeichnet durch eine, mit reinem Sauerstoff oder sauerstoffangereicherter Luft betriebene, Heizeinrichtung (H,A), deren Abgasausgang mit einem Wasserdampfabscheider (W) verbunden ist, wobei dessen Produktgasausgang wiederum unmittelbar mit der Katalysatoreinheit (K) in Verbindung steht, wobei zudem in die Verbindung Abscheider-Kateinheit eine Zumischzuleitung mündet.

Eine Katalysatoreinheit zur vorteilhaften Ausführung des erfindungsdemäßen und artverwandter Verfahren besteht in einer vierfach ineinander geschachtelten, länglichen, vorzugsweise rund und strahlrohrartig ausgebildete Katalysatorretorte mit

a) einem zentral angeordneten Heizbrenner (A),
b) einem umgebenden Abgasrückführkanal (2),
c) einer, den Rückführungskanal umgebenden Katalysatorschicht (3) sowie
d) einen, die Katalysatorschicht umgebenden Hüllkanal (4) mit Öffnung zum Ansaugen von Behandlungsgas und eine, im Kanal angeordnete Sauerstoffgaszufuhr zur Verbrennung von angesaugtem Behandlungsgas im Hüllkanal.

Die Erfindung wird im folgenden anhand einiger Ausführungsbeispiele und unter Zuhilfenahme der anliegenden Figuren näher erläutert. Es zeigt:

Fig. A: Ofenkammer mit Strahlrohrbeheizung - erfindungsgemäße Nutzung der Strahlrohr-Abgase;
Fig. B: Innenbeheizte, die Ofenwand durchdringende Katalysatoreinheit mit Weiterverwendung der eigenen Abgase.

Eine erste Ausgestaltungsvariante der Erfindung zeigt Figur A, wo ein Kammerofen mit Heizeinrichtung H und innenliegender Katalysatoreinheit K gezeigt ist. Die mit reinem Sauerstoff betriebene Heizeinrichtung H liefert ein Abgas, das in einem Wasserabscheider W, der mit dem Abgasausgang der Heizeinrichtung H verbunden ist, vom Wasserdampf durch Abkühlung befreit wird. Nachdem das Abgas den Wasserabscheider W durchlaufen hat, wird über eine, in die Verbindungsleitung V zur Katalysatoreinheit K einmündende Zuleitung Z Methan zum entfeuchteten Abgas zugemischt, und zwar in einer - auf den im Abgas enthaltenen Kohlendioxidanteil - abgestimmten Menge (Einzelheiten zu den Verhältnissen sind der Beschreibung in Zusammenhang mit Figur B entnehmbar). In der Katalysatoreinheit K, die im gezeigten Fall Wärmemenge Q aus dem Ofeninnenraum 1 aufnimmt (was jedoch im Regelfall nicht ausreicht), findet die Umsetzung des Kohlendioxids mit Methan in Kohlenmonoxid und Wasserstoff gemäß

$$CO_2 + CH_4 \rightarrow 2CO + 2\,H_2$$

statt. Schließlich wird das so gebildete Behandlungsgas kopfseitig aus der Katalysatoreinheit K in den Ofeninnenraum entlassen. In Figur A ist ferner eine Schutzgasabsaugung an der Heizeinrichtung H angedeutet. Abgesaugtes Schutzgas könnte hier als teilweiser Ersatz für Heizmethan dienen und so zur weiteren Effizienzsteigerung des Prozesses beitragen.

Mittels Figur B wird nunmehr ein weiteres Ausführungsbeispiel der Erfindung beschrieben: Eine äußerlich vergleichbar zu einem üblichen Heizstrahlrohr ausgebildete Katalysatoreinheit K, die mehrschalig gestaltet ist und dabei

a) einen zentral angeordneten Heizbrenner A,
b) einen umgebenden Abgasrückführkanal 2,
c) eine, den Rückführungskanal umgebenden Katalysatorschicht 3 sowie
d) einen, die Katalysatorschicht umgebenden, beheizbaren Hüllkanal 4

aufweist, stellt die zentrale Einheit dieser Verfahrensvariante dar. Der mittels aus dem Ofeninnenraum angesaugtem Behandlungsgas und über Zuleitung 20 zugeführter Luft befeuerbare Hüllkanal 4 dient der äußerlichen Beheizung der Katalysatorschicht, was speziell bei der hier durchzuführenden Kohlendioxid/Methan-Umsetzung, die einer im Vergleich mit der Erdgas/Methan-Umsetzung deutlich erhöhten Energiezufuhr bedarf, besonders vorteilhaft ist. Speziell bei der Version gemäß vorliegender Erfindung ist der mittig angeordnete Heizbrenner A für Sauerstoffbetrieb geeignet ausgestaltet. Die Sauerstoffzufuhr ist als poröses Keramikrohr P ausgeführt, dem fußseitig Sauerstoff zuführbar ist. Die mit einem Abschirmrohr S gebildete Umhüllung des Keramikrohrs P stellt die "Brennkammer" des gezeigten Heizbrenners A dar, in die das Brenngas, hier $CH_4$, mittels einer entsprechenden Zufuhrleitung einzuleiten ist. Es ergibt sich ein, zwischen Keramikrohr P und Abschirmrohr S ablaufender Verbrennungsvorgang. In dem zwischen Abschirmrohr S und dem umhüllend angeordeten Brennerrohr B gebildeten Kanal 2 findet der Rückfluß der im Betrieb entstehenden Verbrennungsabgase zum Fußende der Katalysatoreinheit K statt, von wo sie über eine Anschlußleitung T zu einem Wasserentferner W transportiert werden. Von dort fließt das entfeuchtete Abgas über eine Verbindungsleitung 10 zurück zur Kat-einheit, wobei über eine Zuleitung 11 Methan einspeisbar ist. Am Fußende der Katalysatoreinheit K wird das dann vorhandene Methan/$CO_2$-Gasgemisch in den Ringraum zwischen Brennerrohr B und Katalysatorrohr R eingeleitet, in dem sich eine, beispielsweise auf der Basis von Nickel oder Edelmetall arbeitende, Katalysatorschicht 3 befindet.

Am Kopfende des Katalysatorrohrs R sind Öffnungen 12 vorhanden, aus denen in der Katalysatorschicht 3 umgesetztes Gas in den Ofeninnenraum entlassen werden kann. Im gezeigten Beispiel tritt das aus dem Öffnungen 12 austretende Gas jedoch zunächst in einen Kopfteil P über, der über entsprechende, beliebig plazierbare Durchlässe mit dem Ofeninnenraum I in Verbindung steht. Richtung Fußende der Kat-einheit K schließt sich an das Kopfteils P das bereits angesprochene, das Katalysatorrohr R mit Abstand umhüllende Hüllrohr U an, womit der die Katalysatorschicht umgebende Hüllkanal 4 gebildet ist. Beispielgemäß weist dieser nun einerseits Öffnungen D in Richtung des Ofeninnenraums auf, andererseits ist im Hüllkanal eine, von außerhalb des Ofens kommende Luftzufuhr 20 installiert, die benachbart zu den Öffnungen D so gestaltet ist, daß durch die Öffnungen D Behandlungsgas aus dem Ofeninneren angesaugt wird und daß - zusammen mit der zugeführten Luft - eine Verbrennung initiert werden kann. Auf diese Weise wird die oben angesprochene Beheizung der Katalysatorschicht 3 im einzelnen realisiert, wodurch sich die ebenfalls bereits angesprochenen, vorteilhaften Bedingungen für die Umsetzung des Abgas-Kohlendioxids mit dem über Zufuhrleitung 11 zugegebenen Methan ergeben.

Für eine erfindungsgemäße Verfahrensweise ist die nun beschriebene Katalysatoreinheit K

- und hierbei insbesondere deren Heizbrenner A - beispielsweise mit reinem Sauerstoff und Methan bzw. Erdgas zu betreiben, wobei erfindungsgemäß unterstöchiometrisch bis stöchiometrisch gearbeitet werden kann. Hierbei gelten folgende Extremgleichungen:

$$CH_4 + \tfrac{1}{2} O_2 \rightarrow CO + H_2 \text{ (rußende Flammen)}$$

bis

$$CH_4 + 2O_2 \rightarrow CO_2 + 2H_2O.$$

Dazwischen entsteht ein Gas mit

$$CH_4 + (0{,}5 \text{ bis } 2\,O_2) \rightarrow x\,CO + y\,H_2 + 2CO_2 + V\,H_2O.$$

Diese Flamme kann sehr heiß werden, darum muß der Brenner auf die Brennrohre in hitzebeständiger Keramik ausgeführt sein.

Allerdings kann über die Einstellung des $O_2$-Gehaltes zwischen 0,5 bis 2 mol die Flammentemperatur geregelt werden.

Das Brennabgas, bestehend aus $x\,CO + y\,H_2 + z\,CO_2 + v\,H_2O$ (x, y, z, v hängen von der $O_2$-Mengeneinstellung ab) beheizt den Katalysator von innen. Es strömt aus dem Brennerrohr B aus und wird über einen indirekt wassergekühlten Wärmetauscher W geleitet. Dabei fällt der Wasserdampf bis auf einen vernachlässigbaren Wert $T_p$ (15 °C) = 1,8 Vol.% $H_2O$ aus. Das Brennrohrgas besteht nun aus

$$x\,CO + y\,H_2 + z\,CO_2 + (0{,}06\,H_2O).$$

Zu diesem Gas wird nunmehr an der Einmündung 11 $CH_4$ hinzugemischt und das entstehende Gasgemisch in das, das Brennerrohr B mit Abstand umgebende, eine Katalysatorschicht 3 enthaltende Katalysatorrohr K eingeleitet. Da die Ausgangsmedien für den Heizbrenner A - $O_2$ und $CH_4$ - mit Überdruck in das Brennerrohr B gefahren werden, reicht der Brenner-Abgasdruck im Allgemeinen aus, um das Abgas/$CH_4$-Gemisch ohne Gebläseunterstützung durch das Katalysatorrohr K zu drücken. Gegebenenfalls könnte ein Gebläse nach dem Kühler W vorgesehen werden. Im Katalysator setzt sich nun das Abgas mit dem $CH_4$ zu

$$x\,CO + y\,H_2 + 2\,CO_2 + z\,CH_4 \rightarrow (x + 2z)\,CO + (y + 2z)\,H_2 \text{ um.}$$

Stellt man die den Brenner unterstöchiometrich auf

$$1\,CH_4 + 1\tfrac{1}{2}\,O_2 \text{ ein, d.h. einen Luftfaktor } \lambda = 0{,}75 \text{ ein,}$$

so ergibt sich nach dem Erdgasverbrennungsdiagramm eine Abgaszusammensetzung von

$$15 \text{ Vol.\% } CO + 18,3 \text{ Vol.\% } H_2 + 18,3 \text{ \% } CO'2' + 48,3 \text{ \% } H_2O$$

oder - in mol ausgedrückt -

$$1 \text{ mol } CH_4 + 1,5 \text{ mol } O_2 \rightarrow 0,45 \text{ mol } CO + 0,55 \text{ mol } H_2 + 0,55 \text{ mol } CO_2 + 1,45 \text{ mol } H_2O.$$

Nach Fällung des Wasserdampfes auf den Taupunkt $T_p$ von 15 °C besteht das getrocknete Gas aus

$$28,1 \text{ \% } CO + 34,3 \text{ \% } H_2 + 34,3 \text{ \% } CO_2 + 1,8 \text{ \% } H_2O.$$

In mol ausgedrückt ergibt sich:

$$1 \text{ mol } CH_4 + 1,5 \text{ mol } O_2 \rightarrow 0,45 \text{ mol } CO + 0,55 \text{ mol } H_2 + 0,55 \text{ mol } CO_2 + 0,02 \text{ mol } H_2O.$$

Setzt man diesem Gas 0,55 mol $CH_4$ dazu und leitet es über den Katalysator, so ergibt sich über die Reaktion

$$0,55 \text{ } CO_2 + 0,55 \text{ } CH4 \rightarrow 0,55 \text{ } CO + 0,55 \text{ } CO + 1,10 \text{ } H2$$

ein Reaktionsgas von

$$1,55 \text{ } CO + 1,65 \text{ } H_2 \text{ } (= 3,2 \text{ mol Reaktionsgas}).$$

Bei unterstöchiometrischer Fahrweise des Brenners mit lambda = 0,75 ergibt sich damit ein in etwa gleichanteilig CO und H2 enthaltendes Wärmebehandlungsgas, das vorteilhaft für Wärmebehandlungen verschiedenster Art herangezogen werden kann und das insbesondere für Aufkohlungen besonders günstige Eigenschaften aufweist. Bei stöchiometrischer Fahrweise des Heizbrenners, also bei $CH4 + 2O2 \rightarrow CO_2 + 2H_2O$, und einem Zusatz von 1 mol $CH_4$ zum getrockneten Abgas ergeben sich gemäß

$$CO_2 + 1 \text{ } CH_4 \rightarrow 2 \text{ } CO + 2 \text{ } H2,$$

4 mol Reaktionsgas. Es können also 4 mol Reaktionsgas mit CO/$H_2$ = 1 erzeugt werden. Das heißt, mit 2 m$^3$ $O_2$ und 2 m$^3$ $CH_4$ ergeben sich 4 m$^3$ Reaktionsgas.

In einer weiteren Erfindungsvariante wird der Heizbrenner A nicht mit reinem Sauerstoff gefahren, sondern mit einem inerten Balastgasanteil betrieben. Beim Betrieb mit reinem Sauerstoff, bei dem in oben beschriebener Verfahrensweise die größte Reaktionsgasausbeute auftritt, ist der Heizbrenner A - wie bereits angesprochen - besonders anspruchsvoll auszuführen, da sich hier die höchsten Flammentemperaturen ergeben. Dies kann mit der nunmehr zu beschreibenden Erfindungsversion vermieden werden, deren Resultat niedrigere Flammentemperaturen sind, weshalb diese mit einer weniger anspruchsvollen Ausführung des Heizbrenners - beispielsweise ohne Keramikbauteile - auskommen kann.

Üblicherweise werden Heizbrenner mit Erdgas und Luft betrieben. Wird der hierbei zwangläufig vorhandene Stickstoff durch ein in seiner Wärmekapazität etwa vergleichbares Gasgemisch aus $CO_2$ und Wasserdampf ersetzt, so brennt der Brenner ebenso kalt wie mit Luft. Erfindungsgemäß wird daher der Brenner A in der jetzt zu beschreibenden Variante mit diesen Ersatzgasen betrieben, wobei dies durch Rückführung der Verbrennungsprodukte des anfäglich mit Luft betriebenen Brenners bewerkstelligt wird. Der Brenner wird also zunächst gemäß

$$CH_4 + 10 \text{ Luft} \rightarrow 1 \text{ } CO_2 + 2 \text{ } H_2O + 8 \text{ } N_2$$

betrieben. 2/3 des so erhaltenen Verbrennugsgases werden sodann in den Brenner zurückgeführt während gleichzeitig die Luftzufuhr eingestellt wird. Andererseits werden dem Brenner als aktive Medien Sauerstoff und Methan in geeignetem Verhältnis zugeführt, womit schließlich, nach einer Anlaufzeit, ein Verbrennungsprozeß gemäß

$$CH_4 + 2O_2 + 2CO_2 + 4\,H_2O \rightarrow 3\,CO_2 + 6\,H_2O$$

abläuft. Bezüglich des dann erhaltenen Verbrennungsabgases erfolgt nun weiterhin eine Aufteilung in 2/3 und 1/3, wobei der 1/3-Anteil nunmehr, wie in der oben beschriebenen Erfindungsvariante, zu Reaktionsgas weiterverarbeitet wird. D.h., es wird der Wasseranteil aus dem $CO_2/H_2O$-Gasgemisch entfernt und der $CO_2$-Anteil mit Methan im Katalysatorrohr K zu Reaktionsgas umgesetzt.

Ein weitere Erfindungsvariante besteht darin, daß - nach Durchlaufen einer Anlaufphase - aus dem Ofeninnern abgesaugtes Reaktionsgas als Brenngas im Heizbrenner A eingesetzt wird. Gemäß dieser Variante wird - nach Durchlaufen einer Anlaufphase mit einem Brennerbetrieb mit Luft und Methan, mit Rückführung und Entwässerung der dann noch stickstoffhaltigen Verbrennungsgase und Reaktionsgasbildung aus dem $CO_2$-Anteil derselben durch Umsetzung mit Methan - die Methangaszufuhr zum Heizbrenner abgeschaltet und stattdessen Reaktionsgas aus dem Ofen dem Heizbrenner als Brenngas zugeführt. Der Brenner brennt fortan gemäß

$$2\,CO + 2\,H_2 + 2\,O_2 \rightarrow 2\,CO_2 + 2\,H_2O,$$

wobei im folgenden, wie bekannt, Reaktions- bzw. Beahndlungsgas aus Verbrennungsgasgemisch gebildet wird, d.h. Wasserabtrennung und katalytische Umsetzung schließen sich wiederum an die Verbrennung an. Hierbei wird als Behandlungsgas aus dem Ofen als Brenngas im Heizbrenner eingesetzt und damit ein relativ $CO_2$-reiches Verbrennungsabgas erhalten, dem nach Wasserabtrennung entsprechend mehr Methan für die CO-Bildung zuzusetzen ist.

Alle nunmehr beschriebenen Varianten der Erfindung liefern jedoch, wie beabsichtigt, ein hochwertiges CO- und H2-reiches Behandlungsgas, das in einer Reihe von Wärmebehandlungsprozessen mit Vorteilen - z.B. verkürzten Aufkohlungszeiten - einhergeht, das jedoch ansonsten im wesentlichen lediglich Prozeßführungen - wie von anderen Behandlungsgasen bekannt - verlangt.

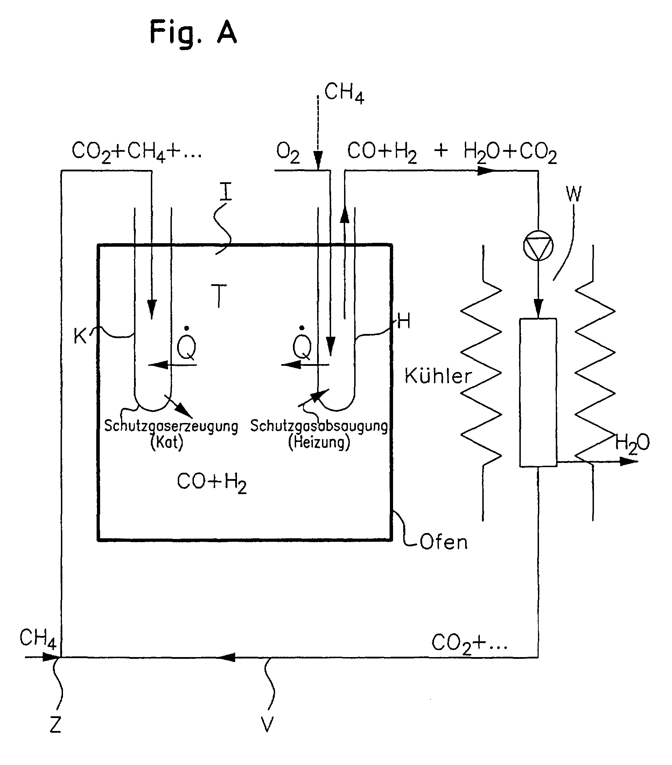

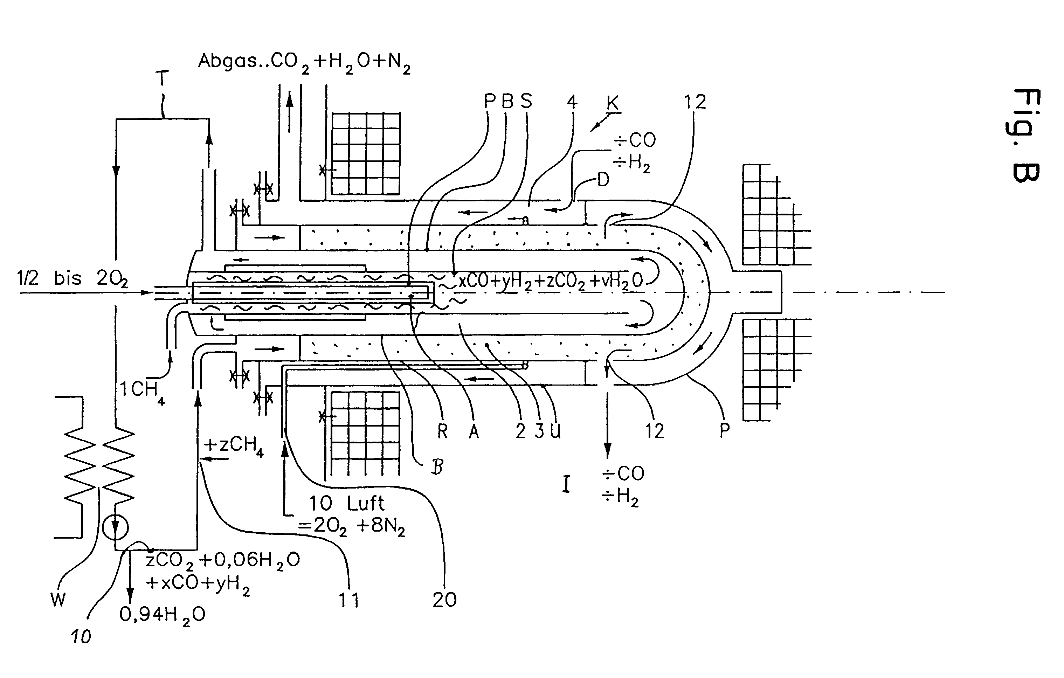

**Patentansprüche**

1. Verfahren zur Erzeugung von CO- und $H_2$-reichem Behandlungsgas für die Wärmebehandlung metallischen Guts, wobei

   - ein aus einer, mit der Wärmebehandlung in Verbindung stehenden Kohlenwasserstoffgas-Verbrennung stammendes Abgas vom Wasser befreit wird,
   - diesem Gas wiederum ein Kohlenwasserstoffgas zugemischt wird und das im so erhaltenen Gasgemisch enthaltene Kohlendioxid mit dem Kohlenwasserstoffgas katalytisch unter Wärmezufuhr in ein CO- und $H_2$-reiches Behandlungs-/Reaktionsgas umgesetzt wird , **dadurch gekennzeichnet,** daß die zugehörige Kohlenwasserstoffgas-Verbrennung mit reinem Sauerstoff oder sauerstoffangereicherter Luft durchgeführt wird.

2. Verfahren nach Anspruch 1, **dadurch gekennzeichnet,** daß mindestens eine Verdreifachung des natürlichen Sauerstoffanteils in der für die Verbrennung vorgesehenen Luft eingestellt wird.

3. Verfahren nach Anspruch 1 oder 2, **dadurch gekennzeichnet,** daß Erdgas bzw. Methan als Brenngas herangezogen wird.

4. Verfahren nach den Ansprüchen 1 bis 3, **dadurch gekennzeichnet,** daß bereits produziertes Behandlungsgas auch als Brenngas herangezogen wird und somit wiederum auch als Ausgangsprodukt für weiteres Behandlungsgas dient.

5. Verfahren nach den Ansprüchen 1 bis 4, **dadurch gekennzeichnet,** daß Abgase beliebiger, sauerstoffbetriebener, in oder in Nachbarschaft einer Wärmebehandlungsanlage arbeitender Heizeinrichtungen oder Strahlrohre als Ausgangsgas für die Behandlungsgaserzeugung herangezogen werden.

6. Verfahren nach Ansprüchen 1 bis 4, **dadurch gekennzeichnet,** daß die für die Umsetzung von $CO_2$ und Kohlenwasserstoffgas erforderliche Wärmezufuhr zu einer entsprechenden Katalysatoreinheit mittels eines mit Sauerstoff oder sauerstoffangereicherter Luft arbeitenden Verbrennungsprozesses geliefert wird, und die Abgase dieses Prozesses für die Behandlungsgaserzeugung herangezogen werden.

**7.** Wärmebehandlungsanlage mit Wärmebehandlungsofen mit Heizeinrichtung (H) und mit Behandlungsgas erzeugender Katalysatoreinheit (K), welche den Ofeninnenraum (1) mit Behandlungsgas versorgt, gekennzeichnet durch eine, mit Kohlenwasserstoffgas und reinem Sauerstoff oder sauerstoffangereicherter Luft betreibbare, Heizeinrichtung (H), deren Abgasausgang mit einem Wasserdampfabscheider (W) verbunden ist, wobei der Produktgasausgang des Wasserdampfabscheiders (W) wiederum über eine Verbindungsleitung (V) - in die ferner eine Zumischzuleitung (Z) einmündet - unmittelbar mit der Katalysatoreinheit (K) in Verbindung steht.

**8.** Vierfach ineinander geschachtelte, längliche, vorzugsweise rund und strahlrohrartig ausgebildete Katalysatorretorte mit

  a) einem zentral angeordneten, für Sauerstoffbetrieb geeigneten Heizbrenner (A),
  b) einem umgebenden Abgasrückführkanal (2),
  c) einer, den Rückführungskanal umgebenden Katalysatorschicht (3) sowie
  d) einen, die Katalysatorschicht umgebenden Hüllkanal (4) mit Öffnung (en) (D) zum Ansaugen von Behandlungsgas und eine, im Kanal angeordnete Sauerstoffgaszufuhr (20) zur Verbrennung von angesaugtem Behandlungsgas im Hüllkanal (4).

**Claims**

**1.** Process for production of CO- and $H_2$-rich treatment gas for the heat treatment of metallic material, in which

  - an exhaust gas originating from a hydrocarbon gas combustion associated with the heat treatment is freed from water,
  - a hydrocarbon gas is added in turn to this exhaust gas and the carbon dioxide present in the resultant gas mixture is catalytically converted, together with the hydrocarbon gas with addition of heat into a CO- and $H_2$-rich treatment/reaction gas, characterized in that the associated hydrocarbon gas combustion is carried out with pure oxygen or oxygen-enriched air.

**2.** Process according to Claim 1, characterized in that the natural oxygen content in the air provided for the combustion is at least tripled.

**3.** Process according to Claims 1 or 2, characterized in that natural gas or methane is used as combustion gas.

**4.** Process according to Claims 1 to 3, characterized in that previously produced treatment gas is also used as combustion gas and thus in turn also serves as starting product for further treatment gas.

**5.** Process according to Claims 1 to 4, characterized in that exhaust gases from any oxygen-operated heating devices or radiant tubes which operate in, or in the vicinity of, a heat-treatment system are used as starting gas for the treatment gas production.

**6.** Process according to Claims 1 to 4, characterized in that the heat supply required for the conversion of $CO_2$ and hydrocarbon gas is delivered to a corresponding catalyst unit by a combustion process operating with oxygen or oxygen-enriched air, and the exhaust gases of this process are used for the treatment gas production.

**7.** Heat-treatment system having a heat-treatment furnace with heating device (H) and having a treatment-gas-producing catalyst unit (K) which supplies the furnace interior (I) with treatment gas, characterized by a heating device (H) which can be operated with hydrocarbon gas and pure oxygen or oxygen-enriched air and whose exhaust gas outlet is connected to a steam separator (W), in which the product gas outlet of the steam separator (W) is in turn directly connected to the catalyst unit (K) via a connection line (V), into which in addition an admixing line (Z) opens.

**8.** Fourfold nested, elongate catalyst retort, preferably constructed round and in the manner of radiant tube, having

  a) a centrally disposed heating burner (A) suitable for oxygen operation,
  b) a surrounding exhaust gas return duct (2),
  c) a catalyst bed (3) surrounding the return duct and
  d) a sheath duct (4) which encloses the catalyst bed and has orifice(s) (D) for drawing in treatment gas and an oxygen gas feed (20) which is disposed in the duct for the combustion of intake treatment gas in the sheath duct (4).

**Revendications**

1. Procédé pour la préparation de gaz de traitement riche en CO et en $H_2$ pour le traitement thermique d'un produit métallique,

   - un gaz de rejet provenant de la combustion de gaz d'hydrocarbures associé au traitement thermique étant débarrassé de l'eau,
   - ce gaz étant mélangé à nouveau à un gaz d'hydrocarbures et le dioxyde de carbone contenu dans le gaz ainsi obtenu étant converti, par voie catalytique, sous apport de chaleur, par réaction avec le gaz d'hydrocarbures, en un gaz de traitement/de réaction riche en CO et en $H_2$ , caractérisé en ce que la combustion associée du gaz d'hydrocarbures est effectuée à l'aide d'oxygène pur ou d'air enrichi d'oxygène.

2. Procédé selon la revendication 1, caractérisé en ce que l'on règle au moins un triplement de la proportion naturelle d'oxygène dans l'air prévu pour la combustion.

3. Procédé selon la revendication 1 ou 2, caractérisé en ce que l'on fait usage, en tant que gaz de combustion, de gaz naturel ou de méthane.

4. Procédé selon les revendications 1 à 3, caractérisé en ce que le gaz de traitement déjà produit est également mis à contribution en tant que gaz de combustion et sert à nouveau également en tant que produit de départ pour un gaz de traitement supplémentaire.

5. Procédé selon les revendications 1 à 4, caractérisé en ce que l'on fait usage, en tant que gaz de départ pour la préparation de gaz de traitement, des gaz de rejet venant d'installations de chauffage ou de tubes radiants quelconques, fonctionnant à l'oxygène, opérant dans une installation de traitement thermique ou dans le voisinage d'une telle installation.

6. Procédé selon les revendications 1 à 4, caractérisé en ce que l'apport de chaleur nécessaire à la conversion du $CO_2$ et du gaz d'hydrocarbures en direction d'une unité catalytique correspondante est livré par l'intermédiaire d'un processus de combustion opérant à l'aide d'oxygène ou d'air enrichi d'oxygène, et en ce que les gaz de rejet de ce processus sont mis à profit pour la préparation du gaz de traitement.

7. Installation de traitement thermique à four de traitement thermique, ayant un dispositif de chauffage (H) et une unité catalytique (K) produisant le gaz de traitement, qui alimente l'espace interne du four (I) à l'aide de gaz de traitement, caractérisée par un dispositif de chauffage (H) fonctionnant à l'aide de gaz d'hydrocarbures et d'oxygène pur ou d'air enrichi d'oxygène, dont la sortie de gaz de rejet est reliée à un séparateur de vapeur d'eau (W), la sortie de produit du séparateur de vapeur d'eau (W) étant en relation immédiate avec l'unité catalytique (K), par l'intermédiaire d'un conduit de connexion (V) - dans lequel débouche en outre un conduit de mélange (Z).

8. Cornue catalytique allongée, de préférence ronde et réalisée en forme de tubes radiants, emboîtée de manière quadruple, possédant

   a) un brûleur de chauffage (A), disposé de manière centrale, approprié au fonctionnement à l'oxygène,
   b) un canal enveloppant de retour des gaz de rejet (2),
   c) une couche catalytique (3) enveloppant le canal de retour et
   d) un canal enveloppe (4), entourant la couche catalytique, avec un orifice ou des orifices (D) en vue de l'aspiration du gaz de traitement et un apport d'oxygène gazeux (20), disposé dans le canal, en vue de la combustion du gaz de traitement aspiré dans le canal enveloppe (4).

# Fig. A

$CH_4$

$CO_2+CH_4+...$     $O_2$     $CO+H_2$  +  $H_2O+CO_2$

W

I

T

Kühler

K

$\dot{Q}$          $\dot{Q}$          H

$H_2O$

Schutzgaserzeugung     Schutzgasabsaugung
(Kat)                  (Heizung)

$CO+H_2$

Ofen

$CH_4$                                    $CO_2+...$

Z                    V

# Fig. B